# EUROPÄISCHE PATENTSCHRIFT

(11) **EP 2 426 277 B1**
(45) Veröffentlichungstag und Bekanntmachung des Hinweises auf die Patenterteilung: **11.05.2016**
(21) Anmeldenummer: 10175457.0
(22) Anmeldetag: 06.09.2010
(51) Int. Cl.: B60K 11/04, E02F 9/08, B62D 25/08, B66F 9/075, F01P 11/10

(54) **Vorderes oder hinteres Fahrzeugteil**
Front or rear vehicle section
Section de véhicule avant ou arrière

(43) Veröffentlichungstag der Anmeldung: 07.03.2012
(73) Patentinhaber: Komatsu Ltd., Tokyo 107-8414 (JP)
(72) Erfinder: Weimer, Juri, 31029 Banteln (DE); Brockhausen, Jens, 04109 Leipzig (DE)
(74) Vertreter: Flügel Preissner Schober Seidel

(56) Entgegenhaltungen:
- EP-A2- 1 329 682
- WO-A1-2007/015121
- DE-A1-102008 026 200
- DE-A1-102008 028 535
- JP-U- 57 133 450

## Beschreibung

### TECHNISCHES GEBIET DER ERFINDUNG

Die Erfindung betrifft ein vorderes oder hinteres Fahrzeugteil. Hierbei handelt es sich insbesondere um ein Vorderteil oder Hinterteil eines Arbeitsfahrzeugs, insbesondere eines Radladers. Derartige Fahrzeugteile dienen vielfältigen Funktionen. Beispielsweise kann ein derartiges Fahrzeugteil das Antriebsaggregat, Hilfsaggregate, einen Tank und/oder Teile einer ungelenkten oder gelenkten Achse mit zugeordneten Antriebsstrangelementen aufnehmen.

### STAND DER TECHNIK

EP 0 281 052 A1 offenbart einen Tank für Hydrauliksysteme. Der Tank besteht aus einem gespritzten oder gegossenen synthetischen Material, beispielsweise ölresistentem Gummi. Der Tank ist elastisch deformierbar. Der Tank ist derart ausgebildet, dass möglichst die Aufnahme von Flüssigkeit und Luft in der Hydraulikflüssigkeit, die in dem Tank bevorratet wird, vermieden werden soll. Dies wird dadurch erzielt, dass infolge der Elastizität des Tanks der Tank bei Befüllung und Entleerung "atmet", so dass keine oder nur eine verringerte Be- und Entlüftung des Tanks mit der Befüllung und Entleerung erfolgen muss.

DE 86 08 045 U1 offenbart einen Tank für Hydraulikflüssigkeit, welcher aus einem korrosionsbeständigen, schlagfesten Spritzkunststoff besteht, der zur Erhöhung der Festigkeit und/oder für eine Verringerung der Wandstärke glasfaserverstärkt ausgebildet sein kann. Weiterhin wird vorgeschlagen, den Tank durchscheinend auszubilden, so dass eine Kontrolle des Füllstands auf Sicht ermöglicht ist.

DE 297 03 178 U1 beschreibt einen Behälter für Hydrauliköl. Der Behälter trägt unmittelbar einen der Kühlung dienenden Lüfter. An dem Lüfter ist ein Förderaggregat befestigt, welches aus einem Motor und einer Pumpe besteht.

DE 10 2004 030 560 A1 betrifft ein Flurförderfahrzeug, beispielsweise einen Gabelstapler. In dem Tank des Flurförderfahrzeugs ist eine Kühleinrichtung integriert. Die Kühleinrichtung durchsetzt den Tank und kühlt über eine Wärmetauschereinrichtung mit Kühlrippen die Hydraulikflüssigkeit in dem Tank. Ergänzend kann eine Kühlung auch eines Batterieraums des Flurförderfahrzeugs und eine Kühlung einer Fahrerkabine erfolgen.

US 2009/0133297 A1 offenbart einen Bagger mit einem Tank für Treibstoff sowie einem weiteren Tank für ein Hydraulikmedium. Die beiden genannten Tanks sind auf einem Rahmen montiert. Die Tanks sind mit seitlichen Türen verkleidet, die Seitenflächen der Karosserie bilden. In den Zwischenräumen zwischen den Türen und den Tanks sind Aufnahmeräume gebildet, in welchen weitere Komponenten wie eine Pumpe aufgenommen werden können. Die Tanks sind geschweißt. Im Bereich einer Oberseite bildet der Tank abseits der Motorhaube unmittelbar die Karosserie des Baggers aus.

US 5,101,885 offenbart einen Hydrauliktank mit einem integral gebildeten Wärmetauscher für einen Austausch von Wärme zwischen dem Hydraulikfluid und Luft. Der Tank trägt auf der Rückseite einen Lüfter.

US 5,715,615 offenbart eine hydraulische Arbeitsmaschine wie einen Bagger mit einem Tank für ein Hydraulikmedium sowie einem Tank für Treibstoff. Die beiden Tanks sind im Inneren einer Dachhaubenabdeckung angeordnet. Ein Lüfter ist hier abseits des Hydrauliktanks angeordnet.

EP 1 302 383 A2 offenbart eine Hydraulikanlage für ein als Niederhubwagen ausgeführtes Flurförderfahrzeug. Ein Behälter für Hydraulikflüssigkeit ist als flexible Blase ausgebildet, die sich zusammenfalten und auseinanderfalten lässt.

CN 201 288 027 Y betrifft einen Raupenkran mit einem hydraulischen Tank, einem Kraftstofftank und einer Motorhaube. Die Druckschrift schlägt vor, einen Teil der Motorhaube unmittelbar mit den Tanks auszubilden, um Platz und Gewicht einzusparen.

JP 57 133450 U offenbart ein Arbeitsfahrzeug, in dem ein von dem Motor angetriebener Lüfter und ein Hydrauliktank angeordnet sind. Der Hydrauliktank ist dabei am hinteren Ende des Arbeitsfahrzeugs angeordnet, dessen Endfläche teilweise durch eine Außenfläche des Hydrauliktanks gebildet ist. Die dieser Außenfläche gegenüberliegende und innenliegend von dem Arbeitsfahrzeug angeordnete Wandung des Hydrauliktanks ist gekrümmt. Die gekrümmte Wandung des Hydrauliktanks lenkt die vom Lüfter aus längs zu dem Arbeitsfahrzeug und zu seinem hinteren Ende hin geförderte Luft nach oben um, wo die Luft aus einer Deckfläche des Arbeitsfahrzeugs nach oben austritt.

DE 10 2008 026 200 A1 betrifft eine modulare Fluidkühlvorrichtung, die einen Hydrauliktank mit einer Ausnehmung für einen antreibbaren Lüfter aufweist. Die Ausnehmung ist in etwa in der Mitte des Hydrauliktanks ausgebildet und von dem Hydrauliktank hohlkranzförmig begrenzt. Auf einer Seite des Hydrauliktanks ist ein Wärmetauscher angeordnet.

DE 10 2008 028 535 A1 betrifft einen Flüssigkeitsspeicher für ein Fahrzeug, der im vorderen Bereich des Fahrzeugs angeordnet ist. Der Flüssigkeitsspeicher ist dabei derart angeordnet, dass seine Außenflächen zumindest teilweise Außenflächen des Fährzeugs bilden. Dem Flüssigkeitsspeicher ist eine Kühlvorrichtung zugeordnet. Diese weist zwei Wärmetauscher auf, die seitlich an dem Flüssigkeitsspeicher angeordnet sind. Zusätzlich ist ein dritter Wärmetauscher vorgesehen, der hinter dem Flüssigkeitsspeicher angeordnet ist. Dem dritten Wärmetauscher nachfolgend ist ein Lüfter vorgesehen. Die drei Wärmetauscher und der Lüfter sind dabei derart abdichtend miteinander und mit dem Flüssigkeitsspeicher verbunden, dass ein durch den Lüfter bewirkter Luftstrom von den Seiten über die zwei ersten Wärmetauscher zu dem dritten Wärmetauscher geführt wird, wobei der Flüssigkeitsspeicher eine Leitfläche für den Luftstrom bildet.

### AUFGABE DER ERFINDUNG

Der Erfindung liegt die Aufgabe zugrunde, ein multifunktionales vorderes oder hinteres Fahrzeugteil vorzuschlagen, welches insbesondere hinsichtlich
- des Bauraums,
- der Integration von Aggregaten und Funktionen,
- des Bauaufwandes,
- einer Strömungsführung eines Lüfterstroms,
- der Fertigungs- und Montagebedingungen,
- der einsetzbaren Materialien und/oder
- des Gewichts
verbessert ist.

### LÖSUNG

Die Aufgabe der Erfindung wird erfindungsgemäß mit den Merkmalen des unabhängigen Patentanspruchs 1 gelöst. Weitere Ausgestaltungen der Erfindung ergeben sich entsprechend den abhängigen Patentansprüchen 2 bis 11.

### BESCHREIBUNG DER ERFINDUNG

Erfindungsgemäß besitzt das Fahrzeugteil, insbesondere ein Hinterteil eines Radladers, beliebig geformte Seitenflächen, eine Bodenfläche sowie eine Deckfläche. Auf der dem Fahrzeug abgewandten Seite besitzt das Fahrzeugteil eine Stirnfläche. Die vorgenannten Flächen können einen in erster Näherung quaderförmigen Körper bilden, aber beliebig gekrümmt und geneigt sein, Vorsprünge, Vertiefungen, Rillen, Ausnehmungen und Ähnliches besitzen, womit Abweichungen von einer quaderförmigen Geometrie möglich sind, die dennoch von der vorliegenden Erfindung umfasst sind.

Das Fahrzeugteil ist mit einem Lüfter ausgestattet.

Darüber hinaus besitzt das Fahrzeugteil eine Art Verkleidung, die einen Teilbereich der Außenfläche des Fahrzeugteils bildet. Beispielsweise handelt es sich bei der Verkleidung um eine Motorhaube, mittels welcher zumindest teilweise eine Seitenfläche, eine Deckfläche und/oder eine Bodenfläche des Fahrzeugteils gebildet ist. Möglich ist, dass eine derartige Motorhaube fest an einem Fahrzeugrahmen befestigt ist, Ebenfalls möglich ist, dass die Verkleidung oder Motorhaube mindestens eine Klappe besitzt, die bewegbar ist zwischen einer Öffnungsstellung, in welcher ein Innenraum des Fahrzeugteils zugänglich ist, in welchem das Antriebsaggregat angeordnet sein kann, und einer Schließstellung. Durchaus denkbar ist aber auch, dass die Motorhaube oder Verkleidung als Ganzes zur Ermöglichung des Zugangs zu dem Antriebsaggregat entfernbar ist oder in eine Öffnungsstellung sowie Schließstellung bringbar ist.

Das erfindungsgemäße Fahrzeugteil ist mit einem Hydrauliktank ausgestattet. Während derartige Hydrauliktanks üblicherweise aus Metall bestehen, ist erfindungsgemäß die oder eine Wandung des Hydrauliktanks mit Kunststoff gebildet. Der Einsatz einer derartigen Wandung aus Kunststoff ermöglicht den Einsatz eines Kunststoffs mit gegenüber den bekannten Materialien wie Metall veränderten Materialeigenschaften. Auch die Fertigung der Wandung oder des gesamten Hydrauliktanks mit veränderten Fertigungsverfahren, insbesondere einem Spritzgießverfahren, einem Rotationsformverfahren oder einem Reaktionsgießen wird erfindungsgemäß ermöglicht. Weiterhin ermöglicht die Bildung einer Wandung des Hydrauliktanks aus Kunststoff unter Umständen eine veränderte Formgebung desselben.

Erfindungsgemäß besitzt der Hydrauliktank eine in Richtung der Längsachse des Fahrzeugteils verlaufende Ausnehmung, welche in dieser Richtung durch den Hydrauliktank durchgeht. Hierbei umfasst die Orientierung der Ausnehmung in Richtung der Längsachse auch gegenüber der Richtung der Längsachse beispielsweise um 10, 20, 30 oder 40° geneigte Orientierungen, sofern eine durch die Ausnehmung hindurchgehende Luftströmung noch eine Strömungskomponente besitzt, welche in Richtung der Längsachse des Fahrzeugteils orientiert ist. Die Ausnehmung kann randgeschlossen sein, so dass sich der Hydrauliktank in Umfangsrichtung vollständig um die Ausnehmung erstreckt. Ebenfalls möglich ist, dass die Ausnehmung randoffen ist, wobei in diesem Fall der Hydrauliktank beispielsweise in der Art eines geschlitzten Rings, U-förmig oder L-förmig ausgebildet sein kann. Es versteht sich, dass der Hydrauliktank hierbei eine beliebige Innen- und Außengeometrie besitzen kann und die ringartige Ausbildung nicht auf eine Kreisringgeometrie beschränkt ist, sondern der Hydrauliktank bspw. auch in der Art eines geschlitzten "Kastens" mit Ausnehmung ausgebildet sein kann. Der Aufnahmeraum des Hydrauliktanks für die hierin zu speichernde Hydraulikflüssigkeit kann sich durchgängig innerhalb des gesamten Hydrauliktanks um die Ausnehmung herum erstrecken oder lediglich über einen Teilumfang derselben. Möglich ist auch, dass der Aufnahmeraum für das Hydraulikmedium in mehrere miteinander kommunizierende oder mehrere separate Kammern unterteilt ist. Es versteht sich, dass die Ausnehmung selber in einem Schnitt quer zur Längsachse des Fahrzeugteils eine beliebige Geometrie besitzen kann.

Erfindungsgemäß ist in der Ausnehmung des Tanks ein Lüfter angeordnet, der somit Luft von der Stirnfläche des Fahrzeugteils durch die Ausnehmung in Richtung von der Stirnfläche weg fördern kann oder in umgekehrte Richtung. Hierzu ist die Förderrichtung des Lüfters oder eine Rotationsachse eines Lüfterrads vorzugsweise ungefähr in Richtung der Längsachse der Ausnehmung orientiert.

Der Hydrauliktank und dessen Aufnahmeraum für das Hydraulikmedium erstrecken sich zumindest teilweise um den Lüfter herum. Somit ergibt sich erfindungsgemäß eine Art "geschachtelter" kompakter Aufbau. Gleichzeitig kann der Hydrauliktank von außen den Lüfter schützen oder abdecken. Möglich ist, dass der Hydrauliktank selber im Bereich der Begrenzungsflächen der Ausnehmung oder von dem Hydrauliktank gehaltene Zusatzelemente den Luftstrom im Umgebungsbereich des Lüfters leiten. Möglich ist, dass der Hydrauliktank als weitere Zusatzfunktion zumindest teilweise den Lüfter abstützt oder trägt. Von Vorteil kann sein, wenn über den durch den Lüfter verursachten Luftstrom bereits eine Kühlung des Hydrauliktanks und des darin angeordneten Hydraulikmediums erfolgt.

Weiterhin bildet erfindungsgemäß eine Außenfläche der Wandung des Hydrauliktanks aus Kunststoff zumindest im Bereich der Deckfläche sowie im Bereich der Seitenflächen einen Teil der Außenfläche des Fahrzeugteils, so dass der Hydrauliktank eine weitere Funktion übernimmt und eine zusätzliche Abdeckung, ein Blech oder ähnliches zur Bildung der Außenfläche des Fahrzeugteils im Bereich des Hydrauliktanks entbehrlich ist. Durch die Gestaltung der Oberfläche der Wandung des Hydrauliktanks aus Kunststoff sowie deren Farbgebung kann gleichzeitig die Außenfläche des Fahrzeugteils vorgegeben werden.

Schließlich geht erfindungsgemäß ein Teilbereich des Fahrzeugteils, der von der Außenfläche der Wandung des Hydrauliktanks aus Kunststoff gebildet ist, in die Verkleidung, beispielsweise die Motorhaube über. Demgemäß ist die Außenkontur des Fahrzeugsteils und dessen optisches Erscheinungsbild sowohl durch die Verkleidung als auch durch die Außenfläche der Wandung des Hydrauliktanks bestimmt, wobei beliebige Übergänge zwischen der Außenfläche der Wandung und der Verkleidung oder Motorhaube, beispielsweise der Übergang mit einer bündigen Kontur, mit einem Spalt, einem Knick oder Sprung, möglich sind. Möglich ist auch, dass im Übergangsbereich zwischen der Wandung des Hydrauliktanks und der Verkleidung Befestigungselemente und/oder Dichtelemente vorgesehen sind.

Durchaus möglich ist weiterhin, dass auch Teilbereiche der Verkleidung oder Motorhaube oder die gesamte Motorhaube gegenüber der Wandung des Hydrauliktanks bewegt oder verschwenkt werden können, so dass die genannte, von der Wandung des Hydrauliktanks und der Verkleidung gebildete Außenkontur je nach Position oder Schwenkstellung variabel ist.

In weiterer Ausgestaltung der Erfindung ist der Hydrauliktank mit einem hitzebeständigen Kunststoff gebildet. Diese Ausgestaltung trägt den unter Umständen im Betrieb auftretenden beträchtlichen Temperaturen, bspw. von bis zu 120°C und mehr, eines in dem Hydrauliktank angeordneten Hydraulikmediums Rechnung. Andererseits kann auch angesichts benachbarter Bauelemente des Hydrauliktanks der Hydrauliktank beträchtlichen thermischen Beanspruchungen ausgesetzt sein. Beispielsweise kann der Hydrauliktank in der Nähe des Antriebsaggregats angeordnet sein, welches im Betrieb eine hohe Arbeitstemperatur erreichen kann.

In besonderer Ausgestaltung der Erfindung ist die Verkleidung als Motorhaube ausgebildet. Diese Motorhaube wird zumindest teilweise auf dem Hydrauliktank abgestützt, wozu der Hydrauliktank geeignete Abstützelemente, Auflagekanten, Flansche, Sicken oder ähnliches besitzen kann.

Die von dem Lüfter geförderte Luft kann im Inneren des Fahrzeugteils für beliebige Zwecke bestimmt sein, beispielsweise Aggregate zwecks Kühlung umströmen oder in den Aggregaten selber als Luftstrom verwendet werden. Möglich ist auch, dass die von dem Lüfter geförderte Luft einem Wärmetauscher zugeführt wird, in welchem ein Wärmeaustausch der Luft mit einem Fluid insbesondere zwecks Kühlung des Fluids erfolgt. Während grundsätzlich der Wärmetauscher an beliebiger Stelle innerhalb des Körpers angeordnet sein kann, solange dieser über geeignete Zuführkanäle und -querschnitte von dem von dem Lüfter geförderten Luftstrom beaufschlagt ist, schlägt die Erfindung in weiterer Ausgestaltung vor, dass der Wärmetauscher im stromabwärtigen Endbereich der den Hydrauliktank durchsetzenden Ausnehmung angeordnet ist. Dies hat zur Folge, dass der von dem Lüfter geförderte Luftstrom nach der kanalartigen Führung in der Ausnehmung unmittelbar den Wärmetauscher beaufschlagt, ohne dass der Luftstrom vergrößerte Wege zurücklegen muss und/oder Verluste erleiden kann.

Während durchaus möglich ist, dass der Wärmetauscher anderweitig abgestützt ist, beispielsweise an einem Fahrzeugträger, ist für eine besondere Ausgestaltung der Erfindung der Wärmetauscher allein oder zusätzlich zu weiteren Befestigungen an dem Hydrauliktank befestigt. Möglicherweise ist der Wärmetauscher an dem Fahrzeug abgestützt und an diesem dann der Hydrauliktank befestigt, wobei aber auch möglich ist, dass der Hydrauliktank am Fahrzeug abgestützt ist und über diesen dann der Wärmetauscher getragen wird.

Die Strömung der von dem Lüfter geförderten Luft innerhalb der Ausnehmung kann begrenzt und/oder geführt sein durch den Hydrauliktank selber, womit dieser eine weitere Funktion erfüllt. Alternativ oder zusätzlich möglich ist, dass der Hydrauliktank eine Art Einsatz trägt, welcher die von dem Lüfter geforderte Luft zumindest teilweise führt.

Der Einsatz und/oder die Konturgebung des Hydrauliktanks können beispielsweise geeignet dafür gestaltet werden, dass ein Spalt zwischen einem Lüfterrad des Lüfters und der von dem Hydrauliktank und/oder dem Einsatz gebildeten Leitkontur für die Strömung möglichst klein ist, so dass der Lüfter mit einem hohen Wirkungsgrad arbeiten kann. Ebenfalls kann durch die gewählte Leitkontur eine Beeinflussung der Strömung und des Volumenstroms erfolgen, indem die Leitkontur beispielsweise düsenartig ausgebildet sein kann. Als weitere Funktion kann die Leitkontur geeignet gewählt werden, um eine gewünschte Umlenkung, Aufspreizung oder ähnliches des von dem Lüfter geförderten Luftstroms herbeizuführen. Wird der Luftstrom beispielsweise durch den Lüfter mit kreisförmiger Geometrie an einem rechteckigen Wärmetauscher vorbeigefördert, kann die Leitkontur in Umfangsrichtung um die Längsachse oder Rotationsachse des Lüfters unterschiedlich derart gestaltet sein, so dass eine Zusammenführung des Luftstroms von einem rechteckigen Strömungsquerschnitt im Bereich des Wärmetauschers zu einem kreisförmigen Querschnitt im Bereich des Lüfters erfolgt, vorzugsweise mit laminaren Übergangsbereichen ohne das Auftreten von Verwirbelungen, welche den Wirkungsgrad verringern könnten. Entsprechendes kann gelten für eine Aufspreizung des Strömung beim Übergang von dem Lüfter zum Austrittsbereich aus dem Fahrzeugteil

Der Hydrauliktank kann in weiterer Ausgestaltung weiteren Funktionen dienen. Beispielsweise kann der Hydrauliktank einen Filter für das Hydraulikmedium tragen und/oder aufnehmen. Möglich ist hierbei, dass der Filter außenliegend von dem Hydrauliktank Anschlüsse für die Zuund Abfuhr des Hydraulikmediums besitzt. Der eigentliche Filter erstreckt sich unter Umständen teilweise in dem Hydrauliktank und steht innerhalb des Hydrauliktanks in Austausch mit dem in dem Hydrauliktank bevorrateten Hydraulikmedium.

Von Vorteil ist weiterhin, wenn der Hydrauliktank ein Be- und Entlüftungsorgan trägt. Dieses kommt sowohl zur Wirkung mit der Veränderung des Füllstands des Hydrauliktanks als auch für eine Entnahme oder eine Befüllung des Hydrauliktanks, wobei durch das Be- und Entlüftungsorgan Volumenänderungen des Hydraulikmediums in dem Hydrauliktank durch die Zu- und Abfuhr von Luft ausgeglichen werden. Ebenfalls möglich ist, dass durch das Be- und Entlüftungsorgan Volumenänderungen ausgeglichen werden, die durch eine Temperaturänderung des Hydraulikmediums in dem Hydrauliktank, sei es durch Temperaturänderung des Hydraulikmediums in Aggregaten des Fahrzeugs oder sei es durch die Veränderung der Außentemperatur, hervorgerufen sind.

Entsprechend einem weiteren Vorschlag der Erfindung kann der Hydrauliktank ein Anzeigeelement für den Füllstand besitzen oder tragen. Um hier lediglich beispielhaft einige Ausgestaltungsformen zu nennen, kann der Hydrauliktank mit einem integralen teiltransparenten Bereich oder Streifen einer Wandung des Hydrauliktanks mit Orientierung in vertikaler Richtung ausgebildet sein, durch welchen der Füllstand ersichtlich ist. Ebenfalls denkbar ist, dass eine Erfassung des Füllstands über einen Sensor erfolgt, der dann an dem Anzeigeelement angezeigt wird. Während das Anzeigeelement durchaus integral mit dem Hydrauliktank ausgebildet sein kann, ist ebenfalls möglich, dass dieses separat hiervon ausgebildet ist und an dem Hydrauliktank befestigt wird, unter Ermöglichung einer Kommunikation des Anzeigeelements mit dem Inneren des Hydrauliktanks.

Für die Verbindung des Hydrauliktanks mit benachbarten Bauelementen wie bspw. der Verkleidung, der Motorhaube, dem Wärmetauscher, dem Lüfter, dem Filter und einem Fahrzeugträger gibt es vielfältige Möglichkeiten. Beispielsweise können hier Flansche, Anlage- oder Anpressflächen, Passelemente, Pressverbindungsbereiche, Klemmbereiche, Rastierungen, Sperrelemente, formschlüssige Verbindungselemente, reibschlüssige Verbindungselemente und ähnliches eingesetzt werden. In bevorzugter Ausgestaltung besitzt der Hydrauliktank Bohrungen oder Gewinde, über welche eine Verbindung mit den benachbarten Bauelementen erfolgen kann. Möglich ist, dass der Hydrauliktank Flansche oder Streben besitzt, in welche die Bohrungen oder Gewinde als Durchgangsbohrungen oder -gewinde oder sacklochartig eingebracht sind. Ebenfalls möglich ist, dass eine Wandung des Hydrauliktanks aus Kunststoff mit einer Sacklochbohrung ausgestattet ist, wobei die Tiefe der Bohrung oder des Gewindes im Verhältnis zur Wandstärke des Hydrauliktanks so gering gewählt ist, dass die weiteren Funktionen des Hydrauliktanks hierdurch nicht beeinträchtigt sind. Gemäß einer besonderen Ausgestaltung der Erfindung kann eine Erhöhung der Tragfähigkeit der Bohrung oder des Gewindes erzielt werden, wenn diese mit Hülsen aus einem anderen, festeren Material, beispielsweise mit Metallhülsen, gebildet sind, welche im Bereich ihrer Mantelfläche großflächig an den den Hydrauliktank bildenden Kunststoff stoffschlüssig angebunden sind, während die Hülse im Inneren die Wirkfläche, beispielsweise das Gewinde, für ein geeignetes Befestigungsmittel bildet.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein erfindungsgemäßes Fahrzeugteil, hier das Hinterteil eines Radladers, in einer räumlichen Ansicht bei Blickrichtung schräg von hinten.
- **Fig. 2**: zeigt Bauelemente des Hinterteils des Radladers, nämlich eine mehrteilige Verkleidung in Form einer Motorhaube, einen Wärmetauscher, einen Lüfter sowie einen Hydrauliktank, in einer räumlichen Explosionsdarstellung bei Blickrichtung schräg von vorne.
- **Fig. 3**: zeigt einen Hydrauliktank mit hieran montiertem Wärmetauscher in einer räumlichen Darstellung bei Blickrichtung schräg von vorne.
- **Fig. 4**: zeigt einen vertikalen Längsschnitt durch ein Hinterteils eines Radladers.
- **Fig. 5**: zeigt einen Hydrauliktank aus Kunststoff in einer räumlichen Darstellung von vorne bei Blickrichtung schräg von oben.
- **Fig. 6**: zeigt den Hydrauliktank gemäß Fig. 5 in einer räumlichen Darstellung bei Blickrichtung schräg von oben und von hinten.
- **Fig. 7**: zeigt in einem vertikalen Längsschnitt einen Hydrauliktank mit im Bereich einer Ausnehmung angeordnetem Lüfter.
- **Fig. 8**: zeigt ein Detail VIII gemäß Fig. 7.
- **Fig. 9**: zeigt eine von dem Hydrauliktank vorgegebene Leitkontur für einen Luftstrom im Bereich des Lüfters in einem Detailschnitt mit Schnittführung radial zur Rotationsachse des Lüfters

### FIGURENBESCHREIBUNG

Die Erfindung betrifft ein beliebiges vorderes oder hinteres Fahrzeugteil 1 eines beliebigen Fahrzeugs. Beispielsweise handelt es sich bei dem Fahrzeug um ein Arbeitsfahrzeug, insbesondere einen Radlader.

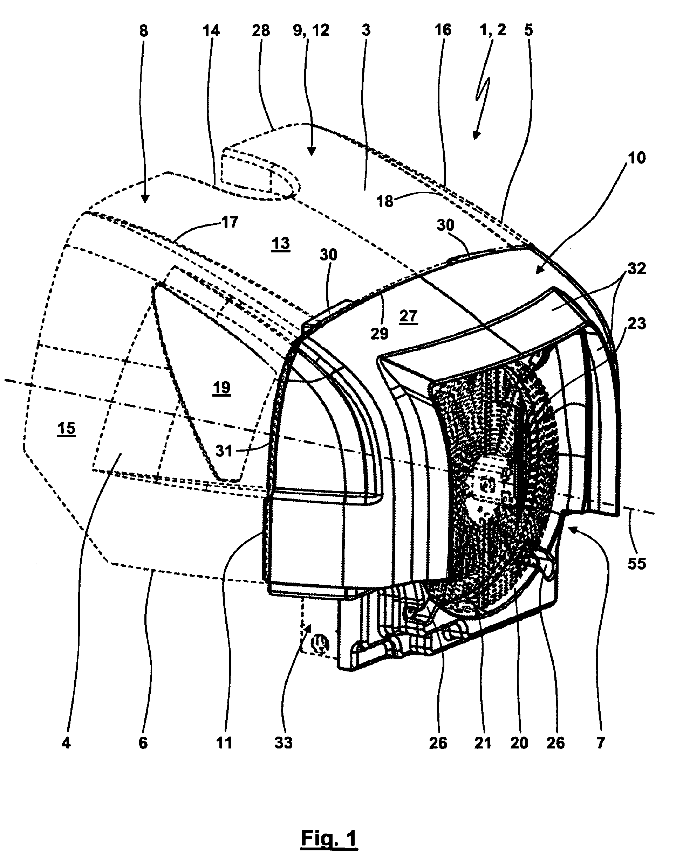

**Fig. 1** zeigt ein derartiges Fahrzeugteil 1, hier ein Hinterteil 2 des Radladers. Das Hinterteil besitzt eine in erster, grober Nährung quaderförmige Außengeometrie mit einer Deckfläche 3, Seitenflächen 4, 5, einer Bodenfläche 6 sowie eine Stirnfläche 7 auf der außenliegenden Seite.

Das Fahrzeugteil 1 besitzt eine Außenfläche 8, welche für das dargestellte Ausführungsbeispiel mit einer in Fig. 1 gestrichelt dargestellten Verkleidung 9 sowie einem Hydrauliktank 10 gebildet ist. Die Verkleidung 9 sowie der Hydrauliktank 10 schließen zumindest im Bereich der Deckfläche 3 sowie der Seitenflächen 4, 5 bündig, ggf. unter Zwischenordnung eines geeigneten Montagespaltes 11, aneinander an, so dass sich die Kontur des Fahrzeugteils von dem Hydrauliktank 10 zu der Verkleidung 9 kontinuierlich und glatt fortsetzt.

Die Verkleidung 9 kann beliebig ausgebildet sein. Für das Ausführungsbeispiel gemäß Fig. 1 ist die Verkleidung 9 eine Motorhaube 12. Eine im Bereich der Deckfläche 3 angeordnete Teilverkleidung 13 ist hierbei fest mit dem Fahrzeug verbunden, beispielsweise verschraubt. Die Teilverkleidung 13 besitzt eine Ausnehmung 14, durch welche ein Auspuff einer Brennkraftmaschine, welche im Inneren der Verkleidung 9 angeordnet ist, hindurchtreten kann. Die Seitenflächen 4, 5 sind mit Teilverkleidungen 15, 16 gebildet. Die Teilverkleidungen 15, 16 sind jeweils verschwenkbar im seitlichen Randbereich der Teilverkleidung 13 an der Teilverkleidung 13 angelenkt, so dass die Teilverkleidungen 15, 16 um Schwenkachsen 17, 18 nach oben verschwenkt werden können, wodurch das Innere der Verkleidung 9 von außen zugänglich ist. Die Teilverkleidungen 15, 16 besitzen Lüftungsöffnungen oder -Schlitze 19, durch die Luft von der Umgebung in das Innere des Fahrzeugteils 1 eintreten kann.

Der Hydrauliktank 10 besitzt eine komplexe Geometrie mit einer für das in Fig. 1 dargestellte Ausführungsbeispiel in Richtung einer Längsachse durchgertenden Ausnehmung 20, in welcher ein Lüfter 21 angeordnet ist, der ein Lüfterrad 22 besitzt, welches um die Längsachse 55 rotiert. Der Lüfter 21 besitzt einen das Lüfterrad 22 umgebenden Käfig 23. Vorzugsweise stützt sich das Lüfterrad 22 mit zugeordnetem Antriebsaggregat 24 über den Käfig 23 an dem Hydrauliktank 10 ab. Hierzu kann der Käfig 23 radial orientierte Haltebügel oder -streben 25 besitzen, welche Aufnahme finden in entsprechenden Ausnehmungen 26 des Hydrauliktanks 10. Für das in Fig. 1 dargestellte Ausführungsbeispiel kann der Lüfter 21 von hinten in die Ausnehmung 20 eingesetzt werden, womit die Haltestreben 25 in die Ausnehmungen 26 eintreten.

Gemäß Fig. 1 bildet der Hydrauliktank 10 mit seiner äußeren Wandung 27 aus Kunststoff sowohl im Bereich der Deckfläche 3 als auch im Bereich der Seitenflächen 4, 5 die Außenfläche 8. Allerdings ist der Hydraulikbehälter 10 im Bodenbereich derart eingezogen, dass dieser in diesem Bodenbereich durch eine nicht dargestellte weitere Verkleidung, einen Fahrzeugträger sowie im Bereich der Stirnfläche 7 mit einem Stoßfänger, einem Gegengewicht und ähnlichem abgedeckt sein kann oder sich hieran abstützen kann. Oberhalb dieser abgedeckten Teilbereiche des Hydrauliktanks 10 bildet der im Querschnitt U-förmige Teilbereiche des Hydrauliktanks 10 unmittelbar einen Teilbereich der Außenfläche 8. Die Teilverkleidung 13 liegt im Bereich einer der Mitte des Fahrzeugs zugewandten begrenzenden Kante 28 auf einem nicht dargestellten Tragelemente oder Auflager auf oder ist hieran befestigt, insbesondere verschraubt. Die gegenüberliegende Kante liegt auf Trägem oder Auflagern 30 des Hydrauliktanks 10 auf oder ist an diesen befestigt, beispielsweise verschraubt, wodurch die Teilverkleidung 13 und die hieran gehaltenen Teilverkleidungen 15, 16 gehalten sind. Des Weiteren besitzt der Hydrauliktank 10 im Wirkverbindungsbereich mit den Teilverkleidungen 13, 15, 16 eine durchgehende umlaufende Sicke 31, deren Tiefe insbesondere ungefähr der Wandstärke der Teilverkleidungen 13, 15, 16 entspricht. Die Teilverkleidung 13 liegt auf dem Boden der Sicke 31 auf, so dass die Außenfläche des Hydrauliktanks 10 im Bereich der Deckfläche 3 bündig zur Außenfläche der Teilverkleidung 13 ist. Im Bereich der Seitenflächen 4, 5 bildet der Bodenbereich der Sicke 13 eine Art Anschlag für die Schließstellung der verschwenkbaren Teilverkleidungen 15, 16, so dass in der Schließstellung dieser Teilverkleidungen 15, 16 ebenfalls der Hydrauliktank 10 im Bereich der Seitenflächen 4, 5 bündig übergeht in die Teilverkleidungen 15, 16. Im Bereich der Stirnfläche 7 bildet der Hydrauliktank 10 einen türrahmenartigen, dachartigen Fortsatz 32 mit U-förmigem Querschnitt aus. In diesen Fortsatz kann ein Abschlussgitter eingesetzt sein, über welches der Lüfter 21 aus optischen Gründen oder anderweitigen Schutzgründen unter Ermöglichung des Hindurchtritts des Luftstroms abgedeckt wird (nicht dargestellt).

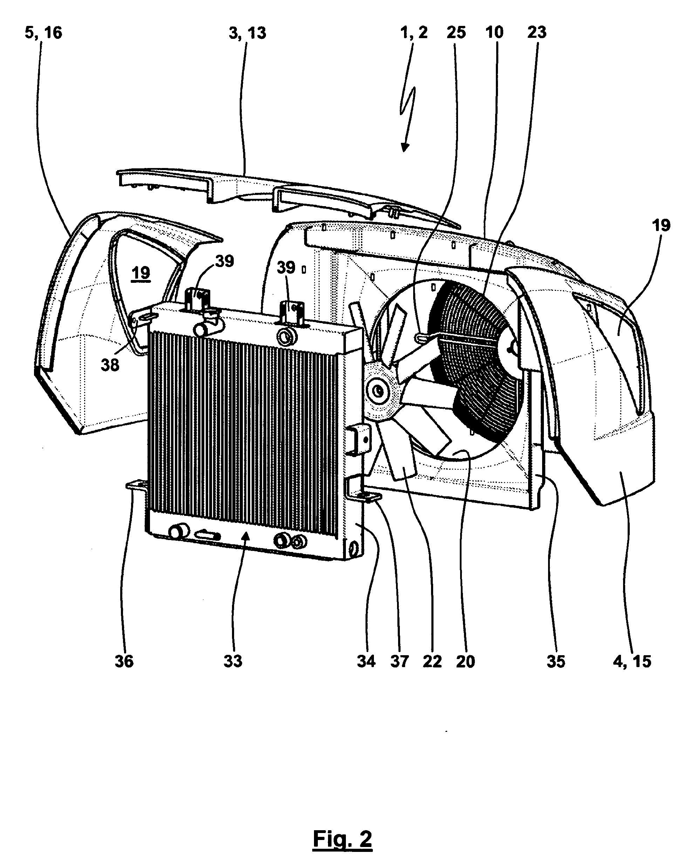

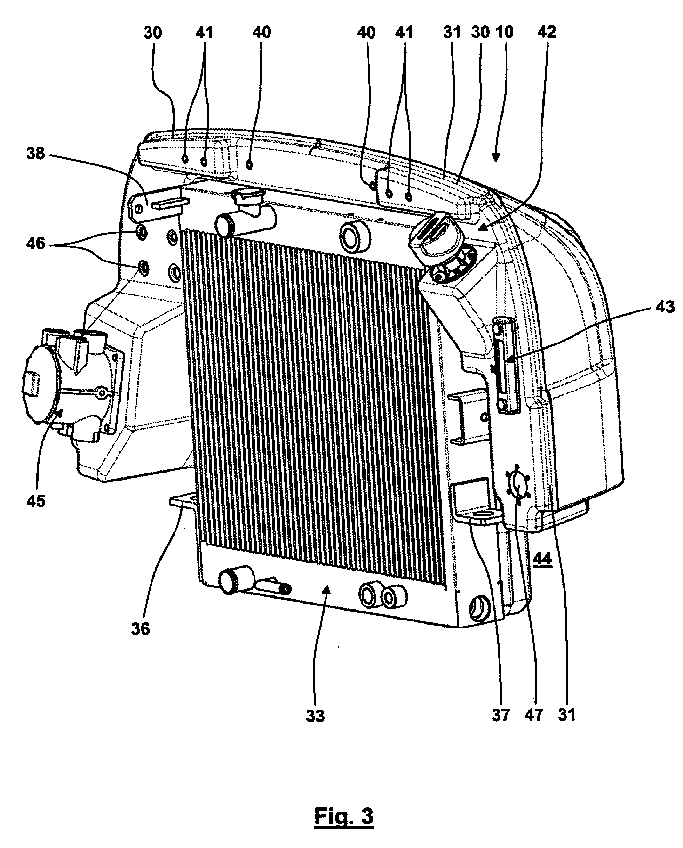

**Fig. 2** zeigt in einer Explosionsdarstellung Teile des Fahrzeugteil 1, nämlich Hinterteils 2. Zu erkennen sind hier die Teilverkleidung 13 für die Deckfläche 3 sowie die Teilverkleidungen 15, 16 für die Seitenflächen 4, 5 mit darin gebildeten Lüftungsöffnungen 19, der Hydrauliktank 10, der Käfig 23, das Lüfterrad 22 sowie ein Wärmetauscher 33. Der Lüfter fördert einen Luftstrom von den Lüftungsöffnungen 19 durch den Wärmetauscher 33, die Ausnehmung 20 des Hydrauliktanks 10 mit Austritt des Luftstroms im Bereich der Stirnfläche 7, so dass eine Förderung im Wesentlichen in Richtung der Fahrzeuglängsachse nach hinten erfolgt. Es versteht sich, das durchaus eine umgekehrte Strömungsrichtung eingesetzt sein kann, ohne dass hierdurch das erfindungsgemäße Prinzip verlassen wird. Dies ist insbesondere dann angezeigt, wenn es sich abweichend zu dem dargestellten Ausführungsbeispiel um eine vorderes Fahrzeugteil handelt. Zu vermeiden ist, dass der genannte Luftstrom nicht vollständig durch den Wärmetauscher 33 und die Ausnehmung 20 des Hydraulktanks 10 hindurchtritt, da dies letztendlich mit einer Verschlechterung des Wirkungsgrads verbunden wäre. Demgemäß kann im Bereich von Seitenflächen 34 des Wärmetauschers 33 und/oder im Bereich von Seitenflächen 35 des Hydrauliktanks 10 eine umlaufende, in den Figuren nicht dargestellte Dichtung angeordnet sein. Der Wärmetauscher 33 besitzt im Bereich der Seitenflächen 34 Flansche 36, 37 über welche der Wärmetauscher 33 am Fahrzeugrahmen (nicht dargestellt) abgestützt sein kann. Ein weiterer Flansch 38 im oberen Endbereich des Wärmetauschers 33 kann ebenfalls über eine zusätzliche Strebe (nicht dargestellt) am Fahrzeugrahmen abgestützt sein. Vertikal nach oben erstrecken sich von dem Wärmetauscher 33 zwei Flansche 39, über welche der Wärmetauscher 33 mit geeigneten Befestigungsbohrungen 40 des Hydrauliktanks 10 verschraubt werden kann (vgl. Fig. 3, in welcher lediglich die Befestigungsbohrungen 40, nicht aber die Flansche 39 dargestellt sind).

In **Fig. 3** sind die Träger oder Auflager 30 zu erkennen sowie Befestigungsbohrungen 41, die diese Träger 30 zumindest teilweise durchsetzen. An den Befestigungsbohrungen 41 kann die Innenverkleidung 9, insbesondere die Teilverkleidung 13 befestigt werden. Die Befestigungsbohrungen 40, 41 sind insbesondere als Sacklochbohrungen ausgeführt und können mit einem Gewinde ausgestattet sein. Vorzugsweise sind die Befestigungsbohrungen 40, 41 mit gegenüber dem Kunststoff des Hydrauliktanks 10 festerem Material, beispielsweise Metall, ausgekleidet. Im oberen Endbereich, nämlich oberhalb des maximal zu erwartenden Füllstands des Hydrauliktanks 10, bildet dieser einen Aufnahmebereich, Flansch- oder Anschlussbereich für ein Be- und Entlüftungsorgan 42 aus. Unterhalb des Be- und Entlüftungsorgans 42, nämlich im Bereich der zu erwartenden unterschiedlichen Füllstände des Hydrauliktanks 10, ist ein Abschluss-, Verbindungs- oder Befestigungsbereich für ein Anzeigeelement 43 für den Füllstand des Hydraulikmediums in dem Hydrauliktank 10 vorgesehen. Hierbei kann es sich um ein Schauglas handeln. Ebenfalls denkbar ist, dass ein durchsichtiger Teilbereich ebenfalls als integraler Bestandteil der Wandung des Hydrauliktanks 10 vorgesehen ist. Unterhalb des Teilbereichs des Hydrauliktanks 10, mit welchem die Außenfläche 8 des Fahrzeugteils 1 gebildet ist, besitzt der Hydrauliktank 10 einen Rücksprung 44, durch welchen sich der Fahrzeugrahmen oder ein Fahrzeuglängsträger erstrecken kann. Möglich ist, dass im Bereich des Rücksprungs 44 der Hydrauliktank 10 auf dem Fahrzeugrahmen aufliegt. Möglich ist weiterhin, dass zwischen den Flanschen 36, 37, über welche der Wärmetauscher 33 am Fahrzeugrahmen abgestützt ist, und dem Fahrzeugrahmen Elemente zur Schwingungsentkopplung zwischengeschaltet sind. Entsprechendes gilt für etwaige Verbindungsstellen zwischen dem Hydrauliktank 10 und dem Fahrzeugrahmen oder anderen benachbarten Bauelementen. Weiterhin besitzt der Hydrauliktank 10 im Bereich seines Sumpfes eine Öffnung, durch welche sich ein Filter 45 für das Hydraulikmedium bis in das Innere des Hydrauliktanks 10 erstreckt. Der Filter 45 besitzt außerhalb des Hydrauliktanks 10 Ein- und Auslässe zur Kommunikation des Hydraulikmediums mit weiteren Aggregaten. Hydraulikmedium kann unter Herbeiführung der Filterwirkung zwischen den Ein- und Auslässen und dem Inneren des Hydrauliktanks 10 ausgetauscht werden. Sofern eine große Kontaktfläche eines Filterelements des Filters 45 mit dem Hydraulikmedium in dem Hydrauliktank 10 gewünscht ist, kann sich das Filterelement und damit der Filter 45 nahezu vollständig in Längsrichtung durch das Innere des Hydrauliktanks 10 erstrecken. Der Hydrauliktank 10 kann weitere Anschlüsse 46 besitzen, über welche optionale zusätzliche Aggregate fluidisch mit dem Hydrauliktank 10 kommunizieren können. Erfolgt kein Einsatz derartiger zusätzlicher Aggregate, können die Anschlüsse 46 mit Blindstopfen verschlossen sein. Darüber hinaus kann am tiefsten Punkt des Hydrauliktanks 10 ein Sauganschluss 47 und ein Ablass vorgesehen sein.

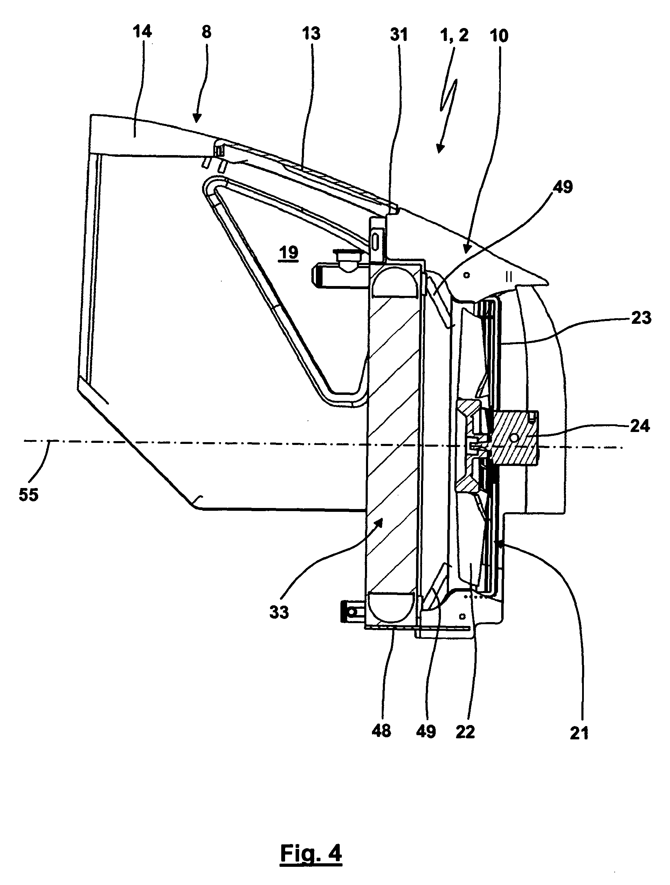

In Fig. 4 ist zunächst der bündige Übergang der Außenfläche 8 von der Teilverkleidung 13 zu der Außenfläche des Hydrauliktanks 10 zu erkennen. Für die Abstützung der genannten Bauelemente gibt es vielfältige Möglichkeiten:
- Die Teilverkleidung 13 und unter Umständen auch die Teilverkleidungen 15, 16 können an dem Hydrauliktank 10 abgestützt oder befestigt sein. Gemäß Fig. 4 erfolgt die Abstützung im Bereich der Sicken 31.
- Alternativ oder zusätzlich kann die Verkleidung 9 an dem Wärmetauscher 33 abgestützt sein.
- Ebenfalls möglich ist, dass die Verkleidung 9 auf nicht dargestellte Weise an dem Fahrzeug, Fahrzeugrahmen oder Längsträger abgestützt ist.
- Der Wärmetauscher 33 kann unmittelbar am Fahrzeugrahmen abgestützt sein. Ebenfalls möglich ist, dass der Wärmetauscher 33 am Hydrauliktank 10 abgestützt ist, welcher wiederum am Fahrzeugrahmen abgestützt ist.
- Entsprechend kann der Hydrauliktank 10 entweder unmittelbar am Fahrzeugrahmen abgestützt sein oder mittelbar über den Wärmetauscher 33 am Fahrzeugrahmen abgestützt sein.
- Der Lüfter 21 kann unmittelbar am Fahrzeugrahmen abgestützt sein oder am Hydrauliktank 10 und/oder am Wärmetauscher 33.
   Es verseht sich, dass beliebige Kraftflüsse alternativ oder kumulativ mit den zuvor aufgeführten Abstützmaßnahmen möglich sind, ohne dass hierdurch der Rahmen der vorliegenden Erfindung verlassen wird. Fig. 4 zeigt beispielhaft die Kopplung des Hydrauliktanks 10 mit dem Wärmetauscher 33 über eine zusätzliche Tragplatte 48, an welcher sowohl der Wärmetauscher 33 als auch der Hydrauliktank 10 befestigt ist. In diesem Fall kann die Tragplatte 48, der Wärmetauscher 33 und/oder der Hydrauliktank 10 am Fahrzeugrahmen abgestützt sein.
- Der Lüfter 21 kann wie erläutert an dem Hydrauliktank 10 abgestützt sein, beispielsweise über den Käfig 23. Ebenfalls möglich ist, dass der Lüfter 21 über Haltestreben 49 alternativ oder ergänzend vom Wärmetauscher 33 gehalten ist. Auch denkbar ist, dass der Lüfter 21 am Fahrzeugrahmen abgestützt ist.

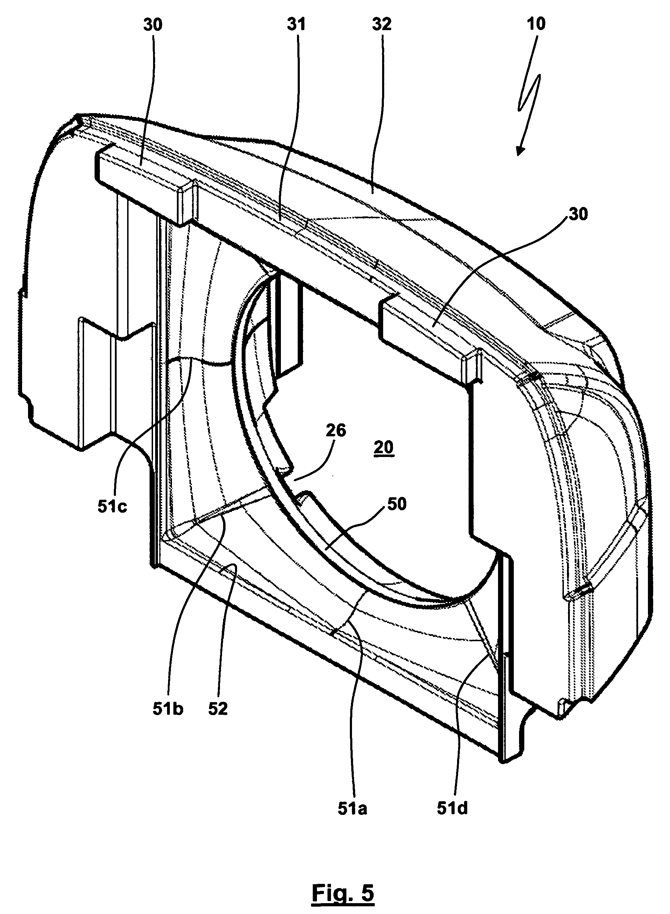

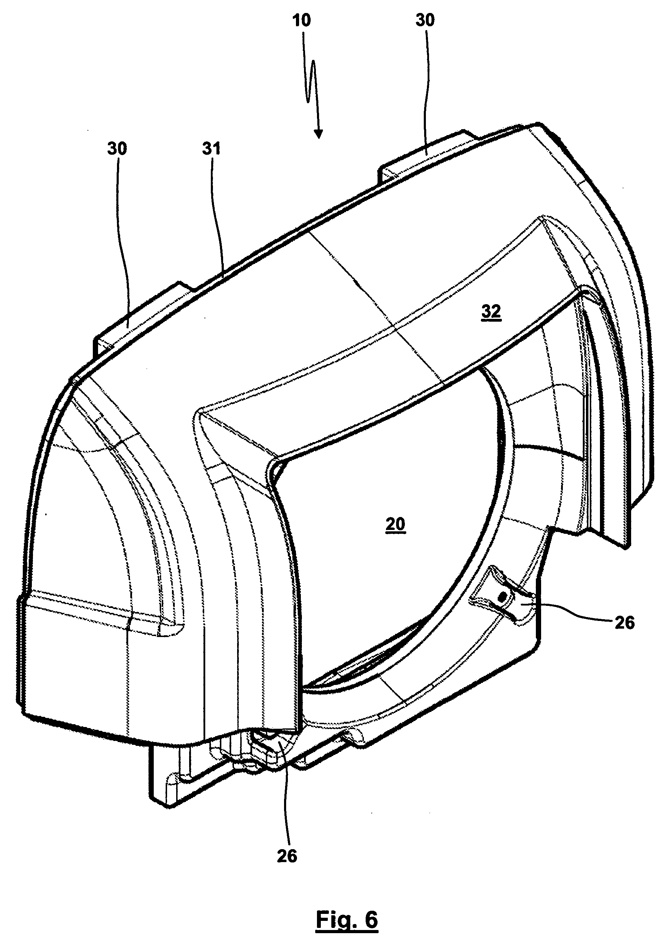

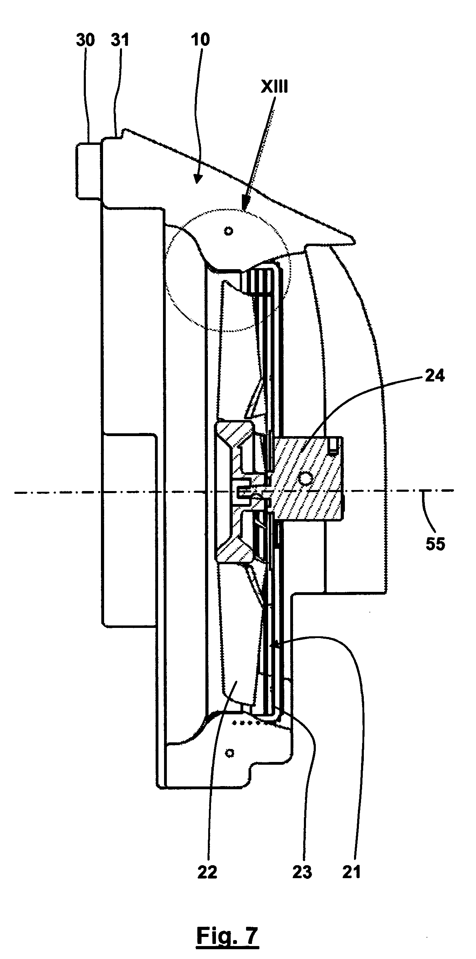

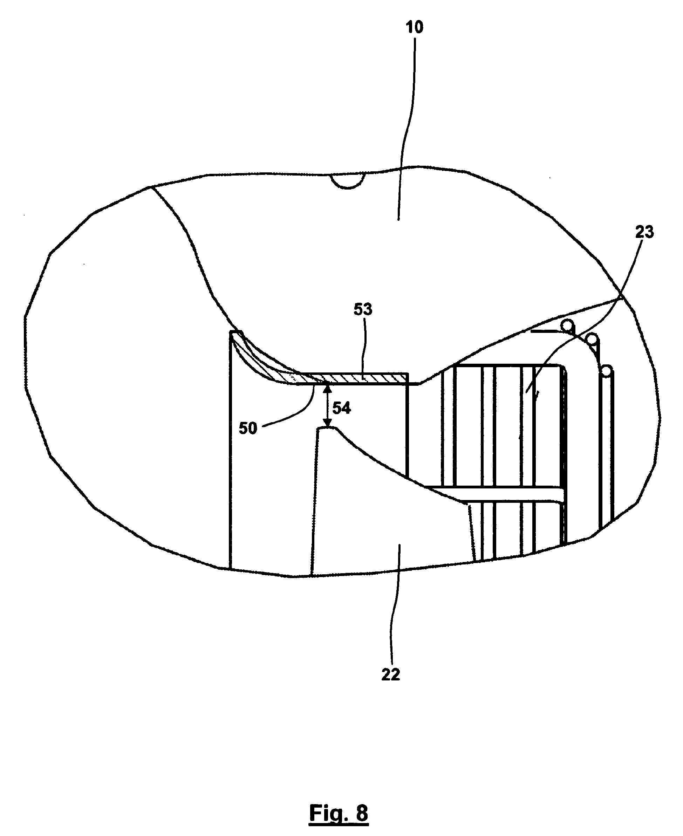

**Fig. 5** **und** **6** zeigen in räumlicher Darstellung den Hydrauliktank 10 als Einzelteil. Die engste Stelle der Ausnehmung 20 des Hydrauliktanks 10 ist als zylindrische Lauf- oder Führungsfläche 50 ausgebildet. Das Lüfterrad 22 rotiert unter Ausbildung eines möglichst dünnen Luftspalts 54 innerhalb der Führungsfläche 50. Von dieser Führungsfläche 50 erweitert sich die Ausnehmung 20 in beide Richtungen. In Richtung des Wärmetauschers 33 geht die Führungsfläche 50 über eine im Längsschnitt kurvenförmige Leitkontur 51 in die rechteckige Öffnung 52 über, welche im montierten Zustand von dem Wärmetauscher 33 verschlossen ist. Die Leitkontur 51 verändert sich in Umfangsrichtung um die Längsachse 55, wobei die Leitkontur 51a im Bereich der Mitten der rechteckigen Öffnung 52 am kürzesten ist und am wenigsten nach außen erweitert ist, während die Leitkontur 51b im Bereich der Ecken der rechteckigen Öffnung 52 länger ausgebildet ist und weiter nach außen führt. Die Leitkonturen 51 sind glatt ohne Sprünge ausgebildet und verändern sich auch in Umfangsrichtung (u. U. bis auf die Ecken selbst wie dargestellt) ebenfalls vorzugsweise ohne Knicke oder Sprünge. Entsprechendes kann für den Übergang der Führungsflächen 50 in Richtung der Stirnfläche 7 gelten je nach Formgebung des Fortsatzes 32 im Querschnitt. Durchaus möglich ist, dass die Führungsfläche 50 unmittelbar von dem Hydrauliktank 10 ausgebildet ist. Fig. 7 und 8 zeigen eine abgewandelte Ausführungsform, bei welcher die Führungsfläche 50 gebildet ist von einem vorzugsweise umlaufenden Leitblech 53, dessen Durchmesser derart angepasst ist, dass sich ein möglichst kleiner Spalt 54 zwischen der Führungsfläche 50 und der Außenfläche des Lüfterrads 22 ergibt. Die Konturgebung des Leitblechs 53 ist vorzugsweise derart gewählt, dass sich dieses ohne Kanten und Sprünge anpasst an die Innenkontur der Ausnehmung 20 des Hydrauliktanks 10.

Durchaus möglich ist, dass in der Ausnehmung 20 des Hydrauliktanks 10 bereits Aussparungen vorgesehen sind, in welche das Leitblech 53 eingesetzt werden kann. Möglich ist für einen veränderten Kraftfluss zur Abstützung des Lüfters 21, dass das Leitblech 53 über Streben an dem Wärmetauscher 33 gehalten ist. An dem Leitblech 53 ist dann der Käfig 23 abgestützt, welcher wiederum das Antriebsaggregat 24 mit zugeordnetem Lüfterrad 22 trägt.

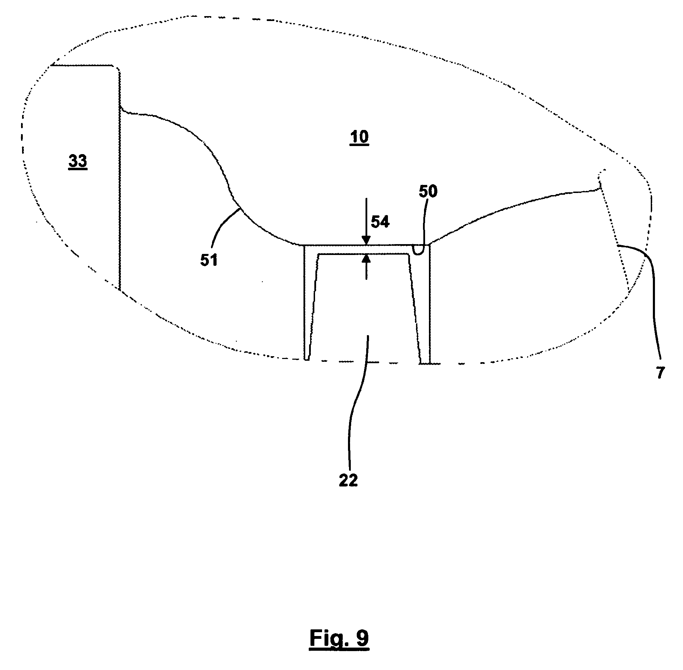

**Fig. 9** zeigt in einem Längsschnitt ein Detail der Leitkontur für die Führung des Luftstroms zwischen der Stirnfläche 7 und dem Wärmetauscher 33. Möglich ist, dass zur Ermöglichung eines möglichst geringen Spaltes 54 das Lüfterrad 22 mit einem geringen Übermaß gegenüber der Führungsfläche 50 gefertigt wird. Mit dem Einsetzen und der Inbetriebnahme des Lüfterrads bewegt sich dieses reibend entlang der Führungsfläche 50. Bei geeigneter Wahl der Steifigkeiten von Lüfterrad 22 und Hydrauliktank 10 kann sich während der Inbetriebnahme die Führungsfläche 50 abarbeiten bis auf das Vorliegen eines minimalen Spaltes 54. Wird für den Hydrauliktank 10 ein hartes Material gewählt, welches eine derartige schleifende Vergrößerung des Durchmessers der Führungsfläche 50 nicht ermöglicht, kann die Führungsfläche 50 auch von einer weicheren Beschichtung des Hydrauliktanks 10 ausgebildet werden, deren Schichtdicke dann mit der Inbetriebnahme verringert wird. Ebenfalls möglich ist das Einsetzen eines Rings aus einem zumindest innenliegend weicheren Material, welches dann entsprechend abgearbeitet werden kann.

Der Wärmetauscher 33 kann der Kühlung beispielsweise von Wasser für eine Brennkraftmaschine dienen. Alternativ oder kumulativ kann dem Wärmetauscher 33 das Hydraulikmedium aus dem Hydrauliktank 10 zwecks Kühlung zugeführt werden. Ebenfalls möglich ist die Kühlung einer Ladeluft eines Laders einer Brennkraftmaschine im Bereich des Wärmetauschers 33. Der Wärmetauscher 33 ist unmittelbar benachbart dem Lüfter 21 angeordnet. Der Hydrauliktank 10 erstreckt sich in einem Längsschnitt in axialer Richtung über den gesamten Lüfter 21 sowie zumindest teilweise über den Wärmetauscher 33. Die Leitungen zwischen Hydrauliktank 10 und Wärmetauscher 33 können somit verkürzt ausgebildet werden, so dass beispielsweise die Leitungen im Wesentlichen radial von dem Hydrauliktank nach Innen zu dem Wärmetauscher geführt sind.

Der Hydrauliktank 10 aus Kunststoff kann rotationsgeformt sein. Beim Rotationsgießen wird hierzu ein Kunststoffgranulat in eine Form eingebracht, welche um eine Vielzahl von Achsen in Rotation versetzt wird. Gleichzeitig erfolgt eine Erwärmung der Form auf beliebige Weise von außen. Das Granulat schmilzt und lagert sich in Folge seiner Schwerkraft im unteren Bereich der Form an. Alternativ oder zusätzlich kann eine chemische Reaktion eingesetzt werden, um einen flüssigen Kunststoff zu erzeugen, der sich in der Form anlagert. Während für das übliche Rotationsverfahren Polyethylen Verwendung findet, wird erfindungsgemäß der Hydrauliktank aus Polyamid (PA6) gefertigt. Die Verkleidung 9, insbesondere die Motorhaube 12 kann aus beliebigem Material hergestellt sein, beispielsweise aus Metall oder ebenfalls aus Kunststoff, wobei hierfür derselbe oder ein anderer Kunststoff eingesetzt werden kann als für den Hydrauliktank 10.

Vorzugsweise findet ein Kraftfluss statt vom Fahrzeugrahmen oder -träger über Dämpfungselemente zu den Flanschen 36, 37, über welche der Wärmetauscher 33 gehalten ist. Der Wärmetauscher 33 trägt dann über die Bohrungen oder Gewinde 40 sowie die Flansche 39 und optional ergänzend die Tragplatte 48 den Hydrauliktank 10, über welchen dann wiederum der Lüfter 21 abgestützt ist.

### BEZUGSZEICHENLISTE

- 1: Fahrzeugteil
- 2: Hinterteil
- 3: Deckfläche
- 4: Seitenfläche
- 5: Seitenfläche
- 6: Bodenfläche
- 7: Stirnfläche
- 8: Außenfläche
- 9: Verkleidung
- 10: Hydrauliktank
- 11: Montagespalt
- 12: Motorhaube
- 13: Teilverkleidung Deckfläche
- 14: Ausnehmung
- 15: Teilverkleidung Seitenfläche
- 16: Teilverkleidung Seitenfläche
- 17: Schwenkachse
- 18: Schwenkachse
- 19: Lüftungsöffnung
- 20: Ausnehmung
- 21: Lüfter
- 22: Lüfterrad
- 23: Käfig
- 24: Antriebsaggregat
- 25: Haltestrebe
- 26: Ausnehmung Haltestrebe
- 27: Wandung Hydrauliktank
- 28: Kante
- 29: Kante
- 30: Träger
- 31: Sicke
- 32: Fortsatz
- 33: Wärmetauscher
- 34: Seitenfläche
- 35: Seitenfläche
- 36: Flansch
- 37: Flansch
- 38: Flansch
- 39: Flansch
- 40: Befestigungsbohrung
- 41: Befestigungsbohrung
- 42: Be- und Entlüftungsorgan
- 43: Anzeigeelement
- 44: Rücksprung
- 45: Filter
- 46: Anschluss
- 47: Sauganschluss
- 48: Tragplatte
- 49: Haltestrebe
- 50: Führungsfläche
- 51: Leitkontur
- 52: Öffnung
- 53: Leitblech
- 54: Spalt
- 55: Längsachse

## Patentansprüche

1. Vorderes oder hinteres Fahrzeugteil (1), insbesondere Vorderteil oder Hinterteil (2) eines Arbeitsfahrzeuges wie ein Radlader, mit
a) einem Lüfter (21),
b) einer Verkleidung (9), die einen Teilbereich der Außenfläche (8) des Fahrzeugteils (1) bildet,
c) einem Hydrauliktank (10),
d) wobei eine Außenfläche der Wandung (27) des Hydrauliktanks (10) einen Teilbereich der Außenfläche (8) des Fahrzeugteils (1) bildet und
e) wobei der Teilbereich des Außenfläche (8) des Fahrzeugteils (1), der von der Außenfläche der Wandung (27) des Hydrauliktanks (10) gebildet ist, in die Verkleidung (9) übergeht,
f) wobei die Außenfläche der Wandung (27) des Hydrauliktanks (10) zumindest einen Teilbereich einer Deckfläche (3) sowie einen Teilbereich von Seitenflächen (4, 5) der Außenfläche (8) des Fahrzeugteils (1) bildet,
**dadurch gekennzeichnet, dass**
g) die Wandung (27) des Hydrauliktanks (10) aus Kunststoff ausgebildet ist,
h) der Hydrauliktank (10) eine in Richtung der Längsachse (55) des Fahrzeugteils (1) verlaufende durchgehende randoffene oder randgeschlossene Ausnehmung (20) besitzt,
i) der Lüfter (21) in der Ausnehmung (20) des Hydrauliktanks (10) angeordnet ist,
j) sich der Hydrauliktank (10) zumindest teilweise um den Lüfter (21) herum erstreckt.

2. Fahrzeugteil (1) nach Anspruch 1, **dadurch gekennzeichnet, dass** der Hydrauliktank (10) mit einem hitzebeständigen Kunststoff gebildet ist.

3. Fahrzeugteil (1) nach einem der vorhergehenden Ansprüche, **dadurch gekennzeichnet, dass** die Verkleidung (9) mit einer Motorhaube (12) gebildet ist und der Hydrauliktank (10) die Verkleidung (9) abstützt.

4. Fahrzeugteil (1) nach einem der vorhergehenden Ansprüche, **dadurch gekennzeichnet, dass** in der Ausnehmung (20) des Hydrauliktanks (10) oder vor oder hinter derselben ein Wärmetauscher (33) angeordnet ist, welcher von der von dem Lüfter (21) geförderten Luft beaufschlagt wird.

5. Fahrzeugteil (1) nach Anspruch 4, **dadurch gekennzeichnet, dass** der Wärmetauscher (33) an dem Hydrauliktank (10) befestigt ist.

6. Fahrzeugteil (1) nach einem der vorhergehenden Ansprüche, **dadurch gekennzeichnet, dass** der von dem Lüfter (21) geförderte Luftstrom durch den Hydrauliktank (10) und/oder durch einen von dem Hydrauliktank (10) getragenen Einsatz (Leitblech 53) geführt wird.

7. Fahrzeugteil (1) nach einem der vorhergehenden Ansprüche, **dadurch gekennzeichnet, dass** der Hydrauliktank (10) einen Filter (45) für das Hydraulikmedium aufnimmt und/oder trägt.

8. Fahrzeugteil (1) nach einem der vorhergehenden Ansprüche, **dadurch gekennzeichnet, dass** der Hydrauliktank (10) ein Be- und Entlüftungsorgan (42) besitzt oder trägt.

9. Fahrzeugteil (1) nach einem der vorhergehenden Ansprüche, **dadurch gekennzeichnet, dass** der Hydrauliktank (10) ein Anzeigeelement (43) für den Füllstand besitzt oder trägt.

10. Fahrzeugteil (1) nach einem der vorhergehenden Ansprüche, **dadurch gekennzeichnet, dass** der Hydrauliktank (10) Bohrungen (40; 41) oder Gewinde besitzt, über welche dieser mit der Verkleidung (9) oder Motorhaube, dem Wärmetauscher (33), dem Lüfter (21), dem Filter (45) und/oder einem Fahrzeugträger verbindbar ist.

11. Fahrzeugteil (1) nach einem der vorhergehenden Ansprüche, **dadurch gekennzeichnet, dass** ein verschwenkbarer Teil der Verkleidung (9), insbesondere der Motorhaube (12), oder die Verkleidung (9) oder Motorhaube (12) selbst in eine Öffnungsstellung sowie eine Schließstellung bewegbar ist, wobei der Teil, die Verkleidung (9) oder die Motorhaube in der Schließstellung zur Anlage an den Hydrauliktank (10) kommt.

## Claims

1. A front or rear vehicle part (1), in particular a front part or a rear part (2) of a work vehicle, such as a wheel loader, comprising
a) a fan (21),
b) a casing (9) forming a portion of the outer surface (8) of the vehicle part (1),
c) a hydraulic tank (10),
d) wherein an outer surface of the wall (27) of the hydraulic tank (10) forms a portion of the outer surface (8) of the vehicle part (1), and
e) wherein the portion of the outer surface (8) of the vehicle part (1) formed by the outer surface of the wall (27) of the hydraulic tank (10) transitions into the casing (9),
f) wherein the outer surface of the wall (27) of the hydraulic tank (10) forms at least a portion of a covering surface (3) and a portion of side surfaces (4, 5) of the outer surface (8) of the vehicle part (1)
**characterized in that**
g) the wall (27) of the hydraulic tank (10) is formed from plastic,
h) the hydraulic tank (10) has a continuous recess (20) which extends in the direction of the longitudinal axis (55) of the vehicle part (1) and which is open or closed at the edges,
i) the fan (21) is disposed in the recess (20) of the hydraulic tank (10),
j) the hydraulic tank (10) extends at least partially around the fan (21).

2. The vehicle part (1) according to claim 1, **characterized in that** the hydraulic tank (10) is formed with a heat-resistant plastic.

3. The vehicle part (1) according to any one of the preceding claims, **characterized in that** the casing (9) is formed with an engine hood (12) and the hydraulic tank (10) supports the casing (9).

4. The vehicle part (1) according to any one of the preceding claims, **characterized in that** a heat exchanger (33), to which the air delivered by the fan (21) is applied, is disposed in the recess (20) of the hydraulic tank (10) or in front of or behind the same.

5. The vehicle part (1) according to claim 4, **characterized in that** the heat exchanger (33) is attached to the hydraulic tank (10).

6. The vehicle part (1) according to any one of the preceding claims, **characterized in that** the air flow delivered by the fan (21) is guided by the hydraulic tank (10) and/or by an insert (guide plate 53) carried by the hydraulic tank (10).

7. The vehicle part (1) according to any one of the preceding claims, **characterized in that** the hydraulic tank (10) accommodates and/or carries a filter (45) for the hydraulic medium.

8. The vehicle part (1) according to any one of the preceding claims, **characterized in that** the hydraulic tank (10) has and/or carries a ventilation organ (42).

9. The vehicle part (1) according to any one of the preceding claims, **characterized in that** the hydraulic tank (10) has and/or carries a display element (43) for the filling level.

10. The vehicle part (1) according to any one of the preceding claims, **characterized in that** the hydraulic tank (10) has bores (40; 41) or threads via which it can be connected to the casing (9) or engine hood, the heat exchanger (33), the fan (21), the filter (45) and/or a vehicle beam.

11. The vehicle part (1) according to any one of the preceding claims, **characterized in that** a pivotable portion of the casing (9), in particular of the engine hood (12), or the casing (9) or the engine hood (12) itself, can be moved into an opened position and a closed position, wherein the portion, the casing (9) or the engine hood comes to rest against the hydraulic tank (10) in the closed position.

## Revendications

1. Partie antérieure ou partie postérieure de véhicule (1), en particulier partie antérieure ou partie postérieure (2) d'un véhicule de chantier comme une chargeuse sur roues, comprenant
a) un ventilateur (21),
b) un habillage (9) qui forme une zone partielle de la surface extérieure (8) de la partie de véhicule (1),
c) un réservoir hydraulique (10),
d) dans lequel une surface extérieure de la paroi (27) du réservoir hydraulique (10) forme une zone partielle de la surface extérieure (8) de la partie de véhicule (1), et
e) la zone partielle de la surface extérieure (8) de la partie de véhicule (1) qui est formée par la surface extérieure de la paroi (27) du réservoir hydraulique (10) se transforme dans l'habillage (9),
f) dans lequel la surface extérieure de la paroi (27) du réservoir hydraulique (10) forme au moins une zone partielle d'une surface de plafond (3) ainsi qu'une zone partielle des surfaces latérales (4, 5) de la surface extérieure (8) de la partie de véhicule (1),
**caractérisée en ce que**
g) la paroi (27) du réservoir hydraulique (10) est réalisée en matière plastique,
h) le réservoir hydraulique (10) possède un évidement à bordure ouverte ou fermée (20) continu s'étendant en direction de l'axe longitudinal (55) de la partie de véhicule (1),
i) le ventilateur (21) est agencé dans l'évidement (20) du réservoir hydraulique (10),
j) le réservoir hydraulique (10) s'étend au moins partiellement tout autour du ventilateur (21).

2. Partie de véhicule (1) selon la revendication 1, **caractérisée en ce que** le réservoir hydraulique (10) est formé avec une matière plastique résistante à la chaleur.

3. Partie de véhicule (1) selon l'une des revendications précédentes, **caractérisée en ce que** l'habillage (9) est formé par un capot moteur (12) et le réservoir hydraulique (10) soutient l'habillage (9).

4. Partie de véhicule (1) selon l'une des revendications précédentes, **caractérisée en ce qu'**un échangeur de chaleur (33), qui est alimenté avec l'air convoyé par le ventilateur (21), est agencé dans l'évidement (20) du réservoir hydraulique (10) ou bien devant ou derrière celui-ci.

5. Partie de véhicule (1) selon la revendication 4, **caractérisée en ce que** l'échangeur de chaleur (33) est fixé sur le réservoir hydraulique (10).

6. Partie de véhicule (1) selon l'une des revendications précédentes, **caractérisée en ce que** le flux d'air convoyé par le ventilateur (21) est guidé à travers le réservoir hydraulique (10) et/ou à travers un insert (tôle de guidage 53) porté par le réservoir hydraulique (10).

7. Partie de véhicule (1) selon l'une des revendications précédentes, **caractérisée en ce que** le réservoir hydraulique (10) reçoit et/ou porte un filtre (45) pour le fluide hydraulique.

8. Partie de véhicule (1) selon l'une des revendications précédentes, **caractérisée en ce que** le réservoir hydraulique (10) possède ou porte un organe d'aération et de purge (42).

9. Partie de véhicule (1) selon l'une des revendications précédentes, **caractérisée en ce que** le réservoir hydraulique (10) possède ou porte un élément d'affichage (43) pour le niveau de remplissage.

10. Partie de véhicule (1) selon l'une des revendications précédentes, **caractérisée en ce que** le réservoir hydraulique (10) possède des perçages (40; 41) ou des taraudages via lesquels le réservoir peut être relié à l'habillage (9) ou au capot moteur, à l'échangeur de chaleur (33), au ventilateur (21), au filtre (45) et/ou à un porte-véhicule.

11. Partie de véhicule (1) selon l'une des revendications précédentes, **caractérisée en ce qu'**une partie pivotante de l'habillage (9), en particulier le capot moteur (12), ou l'habillage (9) ou le capot moteur (12) est déplaçable elle-même jusque dans une position ouverte ainsi que dans une position fermée, dans laquelle l'habillage (9) ou le capot moteur vient, dans la position fermée, en contact contre le réservoir hydraulique (10).
